# EUROPÄISCHE PATENTSCHRIFT

(11) **EP 3 105 556 B1**
(45) Veröffentlichungstag und Bekanntmachung des Hinweises auf die Patenterteilung: **22.01.2020**
(21) Anmeldenummer: 14706794.6
(22) Anmeldetag: 11.02.2014
(51) Int. Cl.: G01F 23/284, H01Q 1/22, H01Q 3/06, H01Q 15/08, H01Q 19/17, H01Q 21/06

(54) **FÜLLSTAND- UND TOPOLOGIEBESTIMMUNG**
DETERMINING A FILL LEVEL AND TOPOLOGY
DÉTERMINATION D'ÉTAT DE REMPLISSAGE ET DE TOPOLOGIE

(43) Veröffentlichungstag der Anmeldung: 21.12.2016
(73) Patentinhaber: VEGA Grieshaber KG, 77709 Wolfach (DE)
(72) Erfinder: WELLE, Roland, 77756 Hausach (DE); DIETERLE, Levin, 77709 Wolfach (DE)
(74) Vertreter: Maiwald Patent- und Rechtsanwaltsgesellschaft mbH
(86) Internationale Anmeldenummer: PCT/EP2014/052647
(87) Internationale Veröffentlichungsnummer: WO 2015/120884

(56) Entgegenhaltungen:
- DE-A1-102004 041 857
- DE-A1-102010 014 457
- US-A- 4 332 374
- US-A1- 2004 108 951
- US-A1- 2006 109 010
- US-A1- 2008 100 501

## Beschreibung

### Gebiet der Erfindung

Die Erfindung betrifft die Füllstand- und Topologiebestimmung einer Füllgutoberfläche. Insbesondere betrifft die Erfindung eine Antennenvorrichtung für ein Füllstandmessgerät, ein Füllstandmessgerät mit einer derartigen Antennenvorrichtung, die Verwendung einer solchen Antennenvorrichtung zur Bestimmung einer Viskosität einer bewegten Flüssigkeit, die Verwendung einer solchen Antennenvorrichtung zur Bestimmung eines Massestroms eines sich auf einem Förderband befindenden Schüttguts, sowie ein Verfahren zur Bestimmung der Topologie einer Füllgutoberfläche.

### Hintergrund

Füllstandmessgeräte oder andere Messgeräte, die im Bereich der Objektüberwachung eingesetzt werden, senden elektromagnetische Wellen oder Ultraschallwellen aus, die an der Füllgutoberfläche oder dem entsprechenden Objekt zumindest teilweise reflektiert werden. Das zumindest teilweise reflektierte Sendesignal kann daraufhin von der Antenneneinheit des Messgeräts aufgenommen und von der damit verbundenen Elektronik ausgewertet werden.

Durch ein Abscannen der Oberfläche ist es möglich, die Topologie der Füllgutoberfläche bzw. des/der Objekte zu bestimmen. Unter der "Topologie" ist im Bereich der Füllstandmessung die Form der Oberfläche des Füllguts zu verstehen. diesem Zusammenhang kann auch der Begriff Topographie verwendet werden.

Derartige Messgeräte zur Topologiebestimmung sind oft aufwendig in der Herstellung und auch im Betrieb.

DE 10 2004 041 857 A1 beschreibt ein Verfahren und eine Vorrichtung zum Ausrichten eines Messgeräts zur Ermittlung des Füllstandes eines Füllguts in einem Behälter nach der Laufzeitmessmethode.

DE 10 2010 014 457 A1 beschreibt ein Verfahren zur Bestimmung mindestens einer Eigenschaft eines Mediums in einem Behälter und eine entsprechende Messeinrichtung mit einem Radar unter Aussendung von Messsignalen in Richtung der Oberfläche des Mediums und Auswertung von zurückreflektierten Anteilen der Messsignale zur Bestimmung der mindestens einen Eigenschaft, vorzugsweise des Füllstandes.

US 2004/0108951 A1 beschreibt eine klappbare Antennenvorrichtung für ein Füllstandmessgerät.

US 2008/0100501 A1 beschreibt ein schwenkbares Füllstandradar mit einer Parabolantenne.

US 4332374 beschreibt eine Befestigung für Radarantenne auf einer Welle zur Messung des Oberflächenprofils der Ladung im Hochofen.

### Zusammenfassung der Erfindung

Es ist eine Aufgabe der Erfindung, eine Vorrichtung und ein Verfahren zur Topologiebestimmung einer Füllgutoberfläche bereitzustellen, durch welche/welches der technische Aufwand reduziert werden kann.

Diese Aufgabe wird durch die Merkmale der unabhängigen Patentansprüche gelöst. Weiterbildungen der Erfindung ergeben sich aus den abhängigen Patentansprüchen und der folgenden Beschreibung.

Ein erster Aspekt der Erfindung betrifft eine Antennenvorrichtung für ein Füllstandmessgerät. Die Antennenvorrichtung weist eine Antenneneinheit und eine Antriebseinheit auf. Die Antenneneinheit ist zum Abstrahlen eines Messsignals in Richtung einer Füllgutoberfläche eines Füllgutes und zum Empfang des an der Füllgutoberfläche reflektierten Messsignals ausgeführt. Die Antriebseinheit ist zum Rotieren der Antenneneinheit um eine Rotationsachse ausgeführt. Die Antenneneinheit weist ein Array auf, das zum Abstrahlen und zum Empfang der Messsignale ausgeführt ist, wobei das Array mehrere Strahlerelemente aufweist, die in einer Ebene angeordnet sind, welche mit der Rotationsachse der Antriebseinheit einen Winkel a einschließt, der ungleich 90 Grad beträgt.

Beispielsweise beträgt der Winkel α zwischen 30 und 60 Grad, beispielsweise 45 Grad.
Hierdurch kann der Messbereich der Antenne vergrößert werden.

Die Rotationsachse kann beispielsweise eine vertikale Rotationsachse sein, wenn die Antennenvorrichtung in oder an einem Behälter, der das Füllgut enthält, installiert ist.

Bei den Strahlerelementen handelt es sich beispielsweise um im Wesentlichen zweidimensionale, flächig ausgebildete Patches.

Alle Elemente können aber auch in Form von anderweitig ausgebildeten Strahlern vorgesehen sein.

Erfindungsgemäß ist das Array ein eindimensionales Array mit einer einzelnen Zeile an Strahlerelementen. Die Zeile erstreckt sich in Längsrichtung der Antenneneinheit. Die Antenneneinheit ist in ihrer Längsrichtung langgestreckt ausgeführt, weist also eine größere Längserstreckung als Quererstreckung auf.

Gemäß einer weiteren Ausführungsform der Erfindung ist das Array ein zweidimensionales Array mit mehreren parallel zueinander angeordneten Zeilen und mehreren senkrecht dazu angeordneten Spalten, die sich jeweils aus den einzelnen Strahlerelementen zusammensetzen. Die Zeilen des Arrays erstrecken sich in Längsrichtung der Antenneneinheit und die Spalten des Arrays erstrecken sich in Querrichtung der Antenneneinheit. Die Strahlerelemente jeder Spalte des Arrays können leitend miteinander verbunden sein.

Hierdurch mag eine Teilfokussierung der Messsignale ähnlich wie bei der Verwendung einer dielektrischen Linse oder einer Parabolrinne in einer Dimension erreicht werden. Das in Querrichtung fest verdrahtete zweidimensionale Array erzeugt folglich eine Fokussierung des Messsignals in Querrichtung.

Selbstverständlich lassen sich weitere Vorrichtungen zur Teilfokussierung der Messsignale verwenden. Zudem ist es möglich, mehrere solcher Anordnungen zur Teilfokussierung entlang der Querrichtung zu kombinieren.

Gemäß einer weiteren Ausführungsform der Erfindung weist die Antennenvorrichtung eine langgestreckte Fokussieranordnung auf, die zum Fokussieren des von der Antenneneinheit abgestrahlten Messsignals ausgeführt ist.

Die langgestreckte Fokussieranordnung weist eine Längsrichtung auf, die sich entlang der Längsrichtung (im Folgenden als Y_{A}-Richtung bezeichnet) des Arrays erstreckt. Darüber hinaus weist sie eine Querrichtung auf, die sich in Querrichtung des Arrays (im Folgenden auch als X_{A}-Richtung bezeichnet) erstreckt. Die Längsausdehnung der langgestreckten Fokussieranordnung kann größer sein als deren Querausdehnung.

Gemäß einem Ausführungsbeispiel der Erfindung weist die Fokussieranordnung eine dielektrische Zylinderlinse auf, deren Längsachse parallel zur Längsrichtung der Antenneneinheit ausgerichtet ist. Gemäß einer weiteren Ausführungsform der Erfindung weist die Fokussieranordnung eine Parabolrinne als Hauptreflektor und einen zur Parabolrinne beabstandet angeordneten Gegenreflektor, beispielsweise eine hyperbolische Rinne, auf, wobei das Array zum Abstrahlen des Messsignals in Richtung des Gegenreflektors auf oder nahe der Oberfläche der Parabolrinne angeordnet ist.

Mithilfe der langgestreckten Fokussieranordnung ist es möglich, das von dem Array abgestrahlte Messsignal in einer Dimension zu fokussieren, nämlich in Querrichtung der Antennenanordnung. Somit unterstützt die Fokussieranordnung die Fokussierung des Messsignals in Querrichtung. Es kann vorgesehen sein, dass die Fokussieranordnung die Fokussierung des Messsignals in Längsrichtung des Arrays nicht unterstützt. Hierfür ist die digitale Strahlformung vorgesehen.

Gerade im Fall der Ausführung des Arrays als eindimensionales Array, dessen eine Zeile sich in Längsrichtung der Antenneneinheit und somit in Längsrichtung der Fokussieranordnung erstreckt, ist die fokussierende Eigenschaft der Fokussieranordnung sehr vorteilhaft, um die Fokussierung des Messsignals in Querrichtung zu verbessern.

Gemäß einer weiteren Ausführungsform der Erfindung weist die Antennenvorrichtung eine Hochfrequenzeinheit zum Erzeugen eines Messsignals auf, wobei die Hochfrequenzeinheit in die Antenneneinheit integriert ist. Die Hochfrequenzeinheit mag dazu ausgeführt sein, hochfrequente Signale, beispielsweise in einem Frequenzbereich von etwa 75 ... 85 GHz zu erzeugen und zu verarbeiten. Die Hochfrequenzeinheit kann auch in die Antriebseinheit integriert sein.

Gemäß einer weiteren Ausführungsform der Erfindung weist die Antennenvorrichtung eine Auswerteelektronik auf, die zusammen mit der Antenneneinheit rotiert, wenn die Antenneneinheit von der Antriebseinheit in Rotation versetzt wird.

Beispielsweise befindet sich die Auswerteelektronik auf der Rückseite der Antenneneinheit, also auf der dem Füllgut abgewandten Seite.

Gemäß einer weiteren Ausführungsform der Erfindung ist die Auswerteelektronik in die Antenneneinheit oder in die Antriebseinheit integriert.

Gemäß einem weiteren Aspekt der Erfindung ist ein Füllstandmessgerät mit einer oben und im Folgenden beschriebenen Antennenvorrichtung angegeben. Hierbei handelt es sich beispielsweise um ein Füllstandradar.

Gemäß einem weiteren Aspekt der Erfindung ist ein Füllstandmessgerät zur Erfassung einer Topologie vorgesehen, wobei das Füllstandmessgerät seine hierzu benötigte Energie ausschließlich über eine Zweileiterverbindung bezieht, und wobei die Zweileiterleitung zur Kommunikation, insbesondere zur Ausgabe zumindest eines Topologiemesswertes oder eines daraus abgeleiteten Messwertes (z.B. der Masse im Behälter) ausgeführt ist. Das Füllstandmessgerät weist beispielsweise eine Energieversorgungs- und Kommunikationsschnittstelle zum Anschluss des Füllstandmessgeräts an eine Zweidrahtleitung, über welche das Füllstandmessgerät mit der für den Messbetrieb notwendigen Energie versorgt werden kann und über welche Messdaten an eine entfernte Steuereinheit übertragen werden können, auf.

Gemäß einem weiteren Aspekt der Erfindung ist die Verwendung einer oben und im Folgenden beschriebenen Antennenvorrichtung zur Bestimmung einer Viskosität einer bewegten Flüssigkeit angegeben.

Gemäß einem weiteren Aspekt der Erfindung ist die Verwendung einer oben und im Folgenden beschriebenen Antennenvorrichtung zur Bestimmung eines Massestroms eines sich auf einem Förderband befindenden Schüttguts angegeben.

Gemäß einem weiteren Aspekt der Erfindung ist ein Verfahren zur Bestimmung der Topologie einer Oberfläche eines Füllgutes oder Schüttguts angegeben. Zunächst wird die Antenneneinheit um eine Rotationsachse, welche beispielsweise in Richtung des Füllgutes weist, rotiert. Gleichzeitig wird ein Messsignal durch die Antenneneinheit in Richtung einer Oberfläche des Füllgutes oder Schüttguts abgestrahlt. Das von der Oberfläche des Füllgutes oder Schüttguts reflektierte Messsignal wird danach von der Antenneneinheit empfangen und aus dem empfangenen Messsignal wird die Topologie der Oberfläche des Füllgutes oder Schüttguts berechnet. Die Antenneneinheit weist ein Array aus mehreren Strahlerelementen auf, die in einer Ebene angeordnet sind, welche mit der Rotationsachse der Antenneneinheit einen Winkel α einschließt, der ungleich 90 Grad beträgt.

Bei dem Array handelt es sich beispielsweise um ein eindimensionales Array, also um eine lineare, serielle Anordnung von mehreren Strahlerelementen. Auch kann ein zweidimensionales Array vorgesehen sein, bei dem beispielsweise die Strahlerelemente jeder Spalte leitend miteinander verbunden sind.

Im Folgenden werden mit Verweis auf die Figuren Ausführungsbeispiele der Erfindung beschrieben.

### Kurze Beschreibung der Figuren

Fig. 1 zeigt ein Messgerät zur Erfassung der Topologie einer Füllgutoberfläche.
Fig. 2 zeigt ein weiteres Messgerät zur Erfassung der Topologie einer Füllgutoberfläche.
Fig. 3 zeigt ein Messgerät mit einer Antennenvorrichtung gemäß einem Ausführungsbeispiel der Erfindung.
Fig. 4 zeigt eine Antenneneinheit gemäß einem Ausführungsbeispiel der Erfindung.
Fig. 5 zeigt eine Antenneneinheit gemäß einem weiteren Ausführungsbeispiel der Erfindung.
Fig. 6 zeigt eine Antenneneinheit gemäß einem weiteren Ausführungsbeispiel der Erfindung.
Fig. 7 zeigt eine Antenneneinheit gemäß einem weiteren Ausführungsbeispiel der Erfindung.
Fig. 8 zeigt ein Messgerät gemäß einem Ausführungsbeispiel der Erfindung zur Verwendung zur Bestimmung eines Massestroms eines sich auf einem Förderband befindenden Schüttguts.
Fig. 9 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung wird im Umfeld von Füllstandmessgeräten angewendet, wobei aber auch eine Anwendung im Bereich der Objektüberwachung oder der Massenstromerfassung möglich und vorgesehen ist. Die Erfassung der Topologie einer Füllgutoberfläche kann insbesondere bei der Messung von Schüttgütern und den dabei auftretenden Schüttkegeln und/oder Abzugstrichtern innerhalb oder außerhalb geschlossener Behälter vorteilhaft anwendbar sein. Es mag aber auch möglich sein, die Topologie bewegter Flüssigkeiten zu erfassen. Diese bildet sich beispielsweise beim Einsatz von Rührern und den daraus erzeugten Strömungsbildern an der Flüssigkeitsoberfläche (sogenannte Tromben) in nichttrivialer Art und Weise aus, und kann Rückschlüsse auf weitere interessierende Größen, beispielsweise die Viskosität oder die Durchmischung des Füllgutes (ggf. unter Berücksichtigung der Geschwindigkeit des Rührwerks) erlauben.

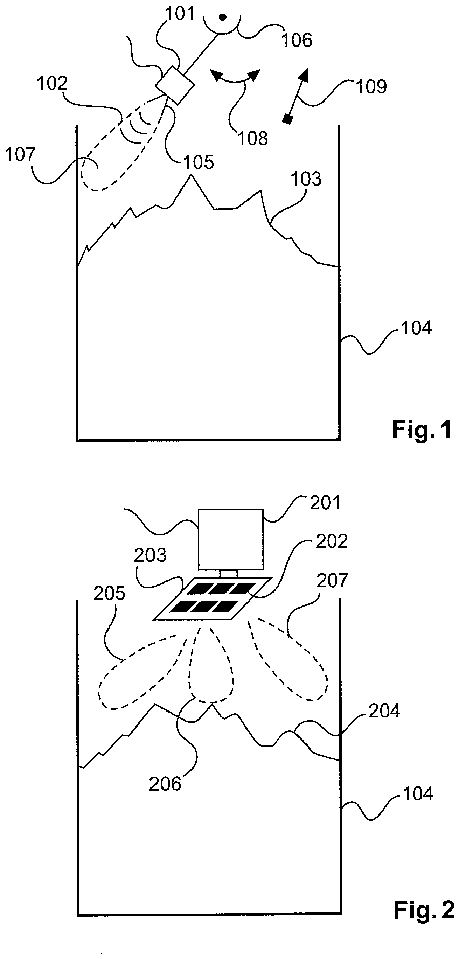

Fig. 1 zeigt ein Füllstandmessgerät 101, das durch Aussenden eines Signals 102 in Richtung einer Füllgutoberfläche 103 ein Abbild der Reflexionsverhältnisse im Behälter 104 erfasst. Das Füllstandmessgerät oder zumindest die Sende- und/oder Empfangseinheit 105 des Gerätes ist in der Lage, durch eine entsprechend ausgeführte mechanische Verstelleinrichtung 106 die Hauptstrahlrichtung 107 der Sende- und/oder Empfangseinheit 105 derart zu verändern, dass die gesamte Oberfläche 103 des Mediums im Behälter im Rahmen eines Messzyklus ausgemessen werden kann. Dazu kann beispielsweise eine Schwenkung des Gerätes sowohl in X-Richtung 108 als auch in Y-Richtung 109 vorgesehen sein.

Das Füllstandmessgerät bestimmt aus der Vielzahl der in X-Richtung und Y-Richtung erfassten Echokurven die Topologie, also den Höhenverlauf der Füllgutoberfläche 103 in Abhängigkeit vom jeweiligen Ort, welcher beispielsweise durch die kartesischen Koordinaten X und Y eindeutig definiert werden kann.

Eine weitere Möglichkeit zur Veränderung der Hauptstrahlrichtung des Messgerätes wird in Fig. 2 gezeigt. Im Gegensatz zur Anordnung aus Fig. 1 besitzt das Messgerät 201 mehrere Sende- und/oder Empfangselemente 202, welche innerhalb einer einzigen Antenne 203 realisiert werden können, oder auch auf mehrere voneinander getrennt liegende Antennen verteilt sein können. Eine derartige Antennenvorrichtung kann als Antennenarray bezeichnet und zur digitalen Strahlformung verwendet werden.

Das Füllstandmessgerät 201 verändert für die Bestimmung der Topologie der Füllgutoberfläche 204 die Hauptstrahlrichtung 205, 206, 207 entweder durch gezielte Veränderung der Ansteuersignale der einzelnen Elemente 202 und/oder durch digitale Verrechnung der von den einzelnen Elementen erfassten Echokurven.

Bei rein mechanischen Lösungen gemäß Fig. 1 besteht zur Realisierung der mechanischen Auslenkung in X und Y-Richtung die Notwendigkeit einer recht komplexen mechanischen Konstruktion 106. Derartige Systeme erfassen zur Erreichung hoher lateraler Auflösungen in X- und Y-Richtung eine Vielzahl von Messpunkten (beispielsweise 90 x 360 Messungen mit jeweils 1 ms Messzeit, d.h. mehr als 30 Sekunden pro Messzyklus).

Darüber hinaus weisen solche Systeme aufgrund der hohen Drehzahlen zur Erreichung niedriger Messzykluszeiten einen hohen mechanischen Verschleiß auf.

Bei rein elektronischen Lösungen zur Veränderung der Hauptstrahlrichtung gemäß Fig. 2 besteht die Notwendigkeit, n mal m einzelne Sende- und/oder Empfangskanäle getrennt zu realisieren. Die Parameter n und m bezeichnen die Anzahl einzelner Abstrahlelemente (202) in der jeweiligen Dimension. Der sich dabei ergebende Aufwand an elektronischen Bauteilen kann zu hohen Herstellungskosten solcher Geräte führen, was den Einsatz in vielen Anwendungen wirtschaftlich unrentabel erscheinen lässt.

Weiterhin besteht bei elektronischer Veränderung der Hauptstrahlrichtung und sehr großen Ablenkwinkeln (beispielsweise größer 45° zur Senkrechten) das Problem, dass die Breite der sich ergebenden Antennenkeule massiv zunimmt. Eine Ablenkung im Bereich von bis zu 90° zur Senkrechten ist mit solchen Systemen prinzipiell nicht zu erreichen.

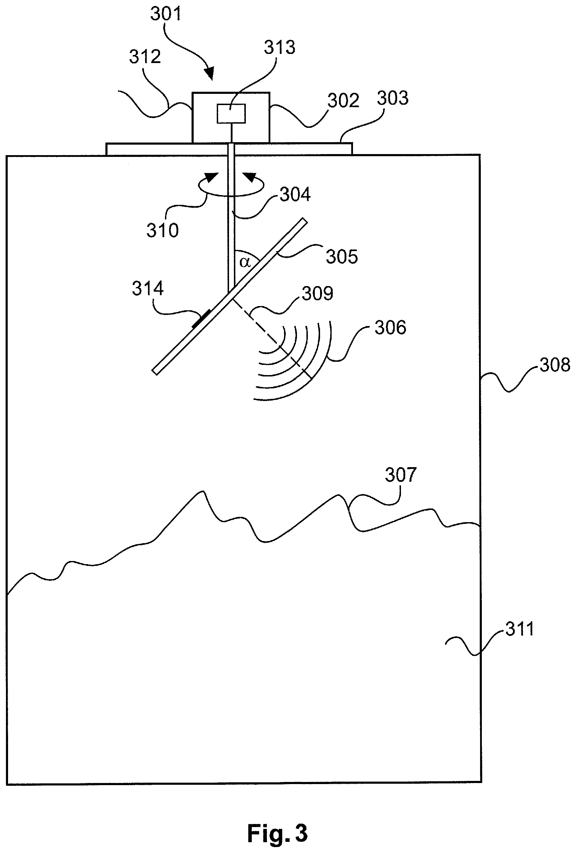

Eine grundlegende Idee der Erfindung liegt in einer Kombination bestimmter vorteilhafter Komponenten der oben beschriebenen Verfahren und Vorrichtungen. Fig. 3 zeigt ein erstes Ausführungsbeispiel der Erfindung. Das Messgerät 301 weist eine Antriebseinheit 302, eine Prozessankopplung 303, eine Antriebsachse 304 sowie zumindest eine Antenneneinheit 305 auf.

Im Ausführungsbeispiel der Fig. 3 wird der gesamte obere Bereich 302 des Füllstandmessgeräts als Antriebseinheit 302 bezeichnet. Die Auswerteelektronik 313 ist in der Antriebseinheit integriert und mit dem Antennenarray verbunden, so dass die vom Antennenarray empfangenen Messsignale an die Auswerteelektronik 313 übertragen werden können. Bezugszeichen 312 bezeichnet ein Anschlusskabel, welches der Energieversorgung und dem Datenaustausch dienen kann.

Neben der Auswerteelektronik kann auch die übrige Elektronik des Füllstandmessgeräts in der Antriebseinheit 302 integriert sein.

Alternativ ist es möglich, dass die Antriebseinheit 302, die Antriebsachse 304 und die Antenneneinheit 305 eine modulare Einheit ausbilden, die an den eigentlichen Grundkörper des Füllstandmessgeräts angeschlossen wird.

Die Antenneneinheit 305 strahlt die von einer Hochfrequenzeinheit 314 erzeugten Signale 306 in Richtung der zu vermessenden Füllgutoberfläche 307 ab. Die Hochfrequenzeinheit 314 kann dabei innerhalb des Antennengehäuses 305 integriert sein. Alternativ ist es auch möglich, die Hochfrequenzeinheit im Bereich der Antriebseinheit 302 vorzusehen. Im Ausführungsbeispiel der Fig. 3 ist die Hochfrequenzeinheit an der Rückseite der Antenneneinheit 305 angeordnet.

Die Antenneneinheit 305 ist über die Antriebsachse 304 drehbar gelagert, und bildet zu dieser einen Winkel α von ungleich 90° aus. Besonders vorteilhalft hat sich ein Winkel von 45° herausgestellt, der die Erfassung von Signalen aus einem weiten Teilbereich des Behälters 308 ermöglicht.

Wird mittels digitaler Strahlformung ein Winkelbereich von ±45° erfasst, ist es somit in Kombination mit der Rotation der Antenne möglich, den kompletten das Schüttgut beinhaltenden Halbraum zu vermessen. Es sind aber auch Winkel <45° möglich, um z.B. Mehrdeutigkeiten bei der digitalen Strahlformung zu umgehen bzw. die Auflösung zu verbessern.

Entlang der Ausdehnung der Antenne 305 (Y_{A}-Richtung) sind mehrere Sende- und/oder Empfangselemente vorgesehen. Jedes dieser Elemente ist in der Lage, Signale aus einem weiten Winkelbereich (bespielsweise im Bereich ± 45° um die Hauptrichtung der Antenne) entlang der Ausdehnung Y_{A} zu verarbeiten, während die Einzelelemente entlang der Ausdehnung X_{A} auch eine scharfe Sende/- Empfangscharakteristik aufweisen können. Die von den Elementen einzeln empfangenen Signale können mit Hilfe bekannter Algorithmen der digitalen Strahlformung dazu verwendet werden, die Hauptstrahl/-empfangsrichtung 309 der Antenneneinheit 305 in einem vorgebbaren Winkelbereich zu verändern. Wird hier ein Winkelbereich von ±45° zur senkrechten Hauptstrahlrichtung 309 gewählt, so lässt sich bei Berücksichtigung der zusätzlich stattfindenden Rotation 310 jeder Punkt der Oberfläche 307 des Füllmediums 311 im Behälter 308 messtechnisch erfassen.

Die Anordnung kombiniert in vorteilhafter Weise die Vorteile einer mechanischen Veränderung der Hauptstrahlrichtung (hier: Rotation) mit denen einer elektronischen Strahlschwenkung. Auf diese Weise lassen sich sehr schnelle Messraten erzielen (beispielsweise kleiner 10 Sekunden), in Kombination mit mechanisch einfacher Konstruktion (geringe Drehzahl, typischerweise ca. 60 min⁻¹) und stark vereinfachter Elektronikkomplexität (beispielsweise aufgrund der eindimensionale Struktur des Antennenarays) verbinden. Typischerweise reicht für die Realisierung der eindimensionalen Arrayzeile eine Anzahl von m <= 20 Elementen aus.

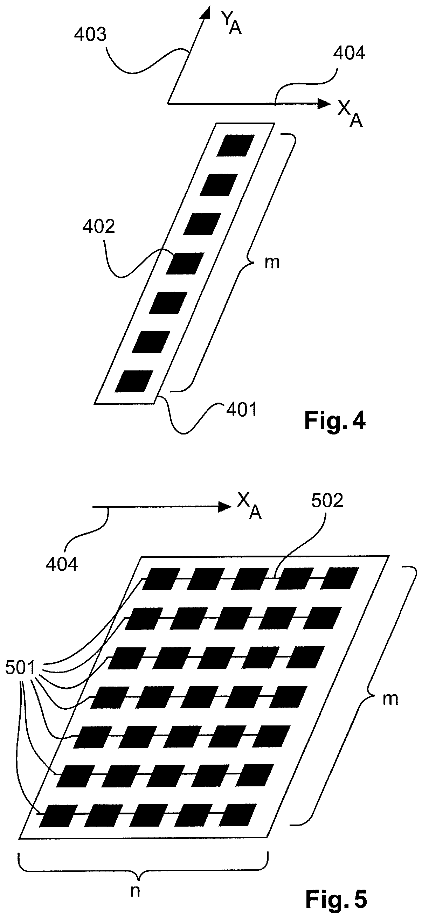

Fig. 4-7 zeigen mögliche Ausgestaltungen der Antenneneinheit.

Fig. 4 zeigt eine Detailansicht einer möglichen Ausgestaltung der Antenneneinheit 305. Die Antenne kann beispielsweise aus einem 1-dimensionalen Antennenarray 401 mit m Einzelelementen bestehen. Die Einzelelemente können durch passend ausgestaltete Leiterplatten-Patches oder auch durch geeignete Hohlleiterenden oder sonstige bekannte Abstrahleinrichtungen realisiert sein.

In einer ersten Ausführungsform kann das mittlere Einzelelement 402 dazu genutzt werden, in einen möglichst großen Winkelbereich gleichmäßig Hochfrequenzenergie in Richtung der Füllgutoberfläche 307 auszusenden. Die von der Füllgutoberfläche reflektierten Signale werden von jedem der Elemente des Antennenarrays 401 empfangen, und separat einer digitalen Auswerteeinheit zugeleitet. Diese ist beispielsweise in der Antriebseinheit untergebracht. Die Auswerteeinheit ist unter Verwendung von digitalen Strahlformungsalgorithmen in der Lage, durch Kombination dieser Signale die Hauptstrahlrichtung und/oder die Hauptempfangsrichtung der Antenne zu verändern, insbesondere in einem Winkel von ±45° zur Senkrechten 309 der Antenneneinheit.

Gleichzeitig wird an dieser Stelle deutlich, dass der Aufwand zur Realisierung getrennter Sende- und/oder Empfangskanäle durch die Reduktion der klassischerweise zweidimensionalen Arrayanordnung 203 auf eine einzige Dimension 401 massiv reduziert werden kann.

Die klassische Arrayanordnung 203 besitzt für jedes einzelne Arrayelement eine typischerweise komplexe Auswerteelektronikschaltung. Der Realisierungsaufwand wird daher von n mal m solcher parallel realisierter Schaltungen auf lediglich m Einzelschaltungen passend zu den m Empfangselementen reduziert.

Die eindimensionale Arrayantenne 401 kann durch Anwendung der nachgelagerten Signalverarbeitungsschritte zur digitalen Strahlformung eine sehr gute Fokussierung der resultierenden Antennencharakteristik in Richtung der Y_{A} - Ausdehnung 403 erreichen. Hierbei handelt es sich um die Richtung parallel zur Hauptachse/Längsachse des Antennenarrays. Die Fokussierung in Richtung der X_{A} - Ausdehnung 404 (hierbei handelt es sich um die Richtung senkrecht zur Hauptachse/Längsachse des Antennenarrays, in der Ebene des Antennenarrays), welche in Kombination mit der Rotation 310 exakt entlang der Radialrichtung wirkt, kann für bestimmte Anwendungsfälle unzureichend sein.

Um dieses Verhalten weiter zu verbessern bieten sich mehrere Ansätze an. Zum einen ist es möglich, an einer Realisierung unter Verwendung der Antenne nach Fig. 4 festzuhalten. Wird innerhalb der nachgelagerten Signalverarbeitung die sich durch die Rotation der Antenne ergebende Dopplerverschiebung in den von den jeweiligen Arrayelementen erfassten Messsignale ausgewertet, so kann die sich ergebende Fokussierung in Querrichtung (radialer Richtung (X_{A} - Ausdehnung)) deutlich verbessert werden. Die dabei verwendeten Algorithmen können die Prinzipien von SAR (Synthetic Aperture Radar) und ROSAR (Rotor Synthetic Aperture Radar, basierend auf rotierenden Antennen) verwenden.

Eine weitere Möglichkeit besteht bei der Verwendung von Patchantennen in einer Vergrößerung der mechanischen Ausdehnung der Antennenstruktur in Richtung der X_{A} - Achse. Fig. 5 zeigt ein entsprechendes Beispiel. Das ursprünglich eindimensionale Antennenarray 401 wird in Richtung der X_{A} - Achse 404 durch zusätzliche Patches 501 verbreitert. Um den Aufwand der zugehörigen Ansteuerelektronik konstant zu halten, werden die zusätzlichen Patches in einem definierten Abstand zu den bislang verwendeten Patches 402 montiert, und durch metallische Verbindungsbahnen 502 fest mit diesen verbunden. Im Gegensatz zu den bekannten zweidimensionalen Antennenarrays 203 wird durch die festen metallischen Verbindungsbahnen 502 die Ausdehnung des ursprünglich eindimensionalen Arrays verbreitert, ohne zusätzliche Bauteile für weitere Hochfrequenzauswerteschaltungen zu benötigen.

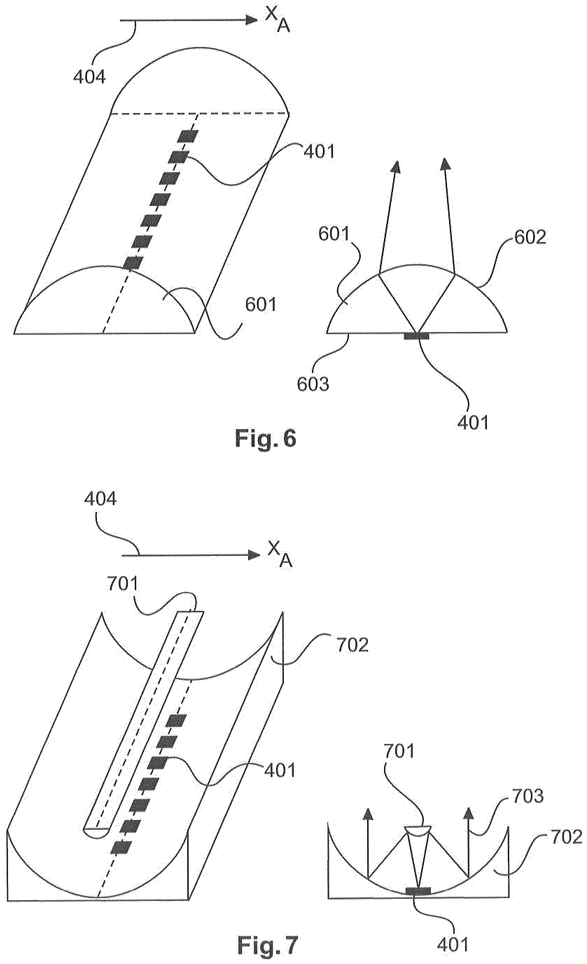

Darüber hinaus ist eine Fokussierung entlang der X_{A} - Achse mit Hilfe einer dielektrischen Zylinderlinse möglich. Fig. 6 zeigt das bislang beschriebene eindimensionale Antennenarray 401 mit einer darüber montierten Zylinderlinse 601.

Die in Fig. 6 dargestellte Zylinderlinse weist eine Basis 603 auf, an der die Strahlerelemente 401 angebracht sind. Darüber spannt sich die gewölbte Oberfläche 602 des Zylindermantelsegments. Beispielsweise ist das eindimensionale Array 401 im Brennpunkt der Zylinderlinse angeordnet.

Eine weitere, besonders vorteilhafte Ausgestaltung sieht die Verwendung einer Parabolrinne als Hauptreflektor in Verbindung mit einer eindimensionalen Cassegrain-Antennenanordnung vor. Fig. 7 zeigt ein entsprechendes Beispiel. Das eindimensionale Antennenarray 401 wird in Verbindung mit einem passend ausgestalteten Gegenreflektor 701 (beispielsweise eine Hyperbolrinne (hyperbolische Rinne)) und der Parabolrinne 702 in Richtung der X_{A} - Achse 404 stark fokussiert, was die Anwendung der gezeigten Anordnung in Verbindung mit dem erfindungsgemäßen Messgerät 301 besonders vorteilhaft macht.

Im Ausführungsbeispiel der Fig. 7 befindet sich das eindimensionale Antennenarray 401 auf der gewölbten, reflektierenden Oberfläche der Parabolrinne 702 und strahlt in Richtung des Gegenreflektors 701, beispielsweise eine hyperbolische Rinne. Die ausgesendeten Messsignale 703 werden zunächst am Gegenreflektor in Richtung der gewölbten Oberfläche der Parabolrinne 702 reflektiert und dann von der gewölbten Oberfläche der Parabolrinne 702 in Richtung Füllgutoberfläche fokussiert.

Des Weiteren ist es aber auch möglich, hier nicht aufgeführte Fokussiervorrichtungen zur Fokussierung entlang X_{A}-Richtung zu verwenden und mit einer mechanischen Rotation zu kombinieren.

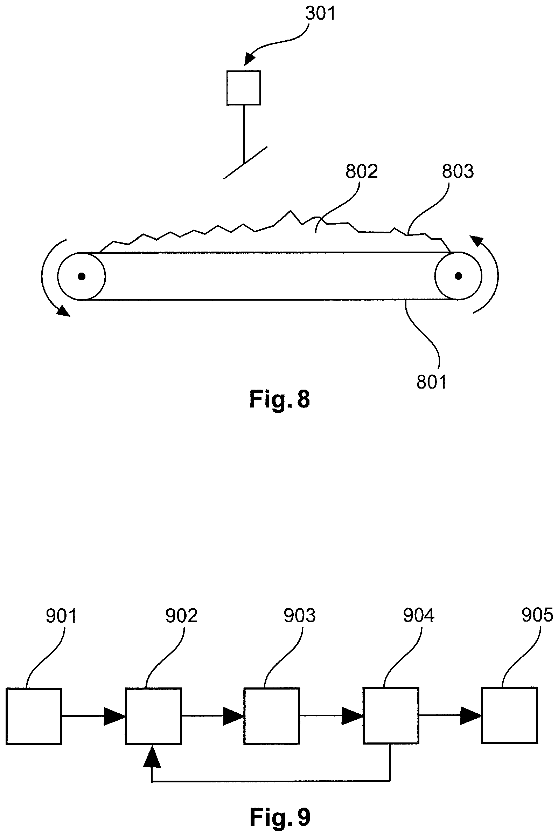

Fig. 8 zeigt ein Förderband 801, auf welchem Schüttgut 802 transportiert wird. Das Schüttgut bildet eine unregelmäßige Oberfläche 803 aus, welche von dem Messgerät 301 vermessen werden kann. Bei dem Messgerät 301 kann es sich beispielsweise um ein Füllstandmessgerät, z.B. ein Füllstandradargerät handeln, welches neben der Topographie der Schüttgutoberfläche auch den Füllstand des Füllgutes berechnen und ausgeben kann.

Fig. 9 zeigt ein Flussdiagramm eines Verfahrens gemäß einem Ausführungsbeispiel der Erfindung. In Schritt 901 wird eine Antenneneinheit um eine beispielsweise vertikale Rotationsachse kontinuierlich oder schrittweise rotiert. In Schritt 902 strahlt die Antenneneinheit ein in Y_{A}-Richtung breites Messsignal in Richtung einer Füllgutoberfläche ab. In Schritt 903 wird das an der Füllgutoberfläche reflektierte Messsignal von den Einzelelementen der Antenneneinheit empfangen. In Schritt 904 werden mittels digitaler Strahlformung Echokurven aus verschiedenen Hauptempfangsrichtungen der Antenneneinheit im zu messenden Winkelbereich mittels bekannter Algorithmen der digitalen Strahlformung errechnet.

Das Verfahren springt dann zurück zu Schritt 902, gefolgt von Schritt 903, gefolgt von einem abermaligen digitalen Scan über den in Y_{A}-Richtung zu messenden Winkelbereich durch elektronische Strahlsteuerung (Schritt 904). Die Schritte 902-904 können nun so oft durchlaufen werden, bis ein kompletter Datensatz (mehrere Messpunkte pro Umdrehung) aufgezeichnet ist.

Zuletzt wird in Schritt 905 die Topologie der Füllgutoberfläche und/oder der Füllstand aus den von der Antenneneinheit über digitale Strahlformung gewonnenen Messsignalen in dem im Schritt 901 abgescannten Winkelbereich berechnet.

Die Erfindung stellt somit eine Vorrichtung und ein Verfahren zur Fokussierung eines Radarsignals entlang einer Linie bereit, welche durch Rotation über die Oberfläche eines Füllmediums geführt wird. Aus den hieraus erfassten Echokurven lässt sich die Topologie des Mediums im Behälter ermitteln. Insbesondere kann vorgesehen sein, dass ein im Wesentlichen eindimensional abstrahlendes Antennenarray, welches mittels digitaler Strahlformung die Erfassung oder Berechnung von Echokurven entlang einer ersten Achse ermöglicht, mit einer mechanischen Drehung um eine zweite Achse kombiniert wird, so dass die Erfassung von Echokurven aus einem zweidimensionalen Gebiet ermöglicht wird. Typischerweise stehen diese beiden Achsen senkrecht aufeinander.

Die Erfindung reduziert daher den mechanischen Aufwand und die mechanische Belastung einer rotierenden Antennenanordnung durch Kombination mit einem eindimensionalen Antennenarray, was neben der Wirtschaftlichkeit der Lösung auch die Zeitdauer zur Erfassung von Echokurven optimieren kann.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Antennenvorrichtung für ein Füllstandmessgerät (301), die Antennenvorrichtung aufweisend:
eine Antenneneinheit (305) zum Abstrahlen eines Messsignals in Richtung einer Füllgutoberfläche und zum Empfang des an der Füllgutoberfläche reflektierten Messsignals;
eine Antriebseinheit (302) zum Rotieren der Antenneneinheit um eine Rotationsachse;
**dadurch gekennzeichnet,**
**dass** die Antenneneinheit ein Array aufweist, das zum Abstrahlen während der Rotation der Antenneneinheit und zum Empfang des Messsignals ausgeführt ist;
**dass** das Array mehrere Strahlerelemente (402) aufweist, die in einer Ebene angeordnet sind, welche mit der Rotationsachse einen Winkel α einschließt, der ungleich 90 Grad beträgt;
**dass** das Array ein eindimensionales Array mit einer einzelnen Zeile an Strahlerelementen (402) ist, dessen eine Zeile sich in Längsrichtung der Antenneneinheit (305) erstreckt.

2. Antennenvorrichtung nach Anspruch 1,
wobei der Winkel α 45 Grad beträgt.

3. Antennenvorrichtung nach einem der vorhergehenden Ansprüche,
wobei das Array ein zweidimensionales Array mit mehreren parallel zueinander angeordneten Zeilen und mehreren senkrecht dazu angeordneten Spalen an Strahlerelementen (402) ist;
wobei sich die Zeilen in Längsrichtung der Antenneneinheit (305) erstrecken und sich die Spalten sich in Querrichtung der Antenneneinheit (305) erstrecken;
wobei die Strahlerelemente jeder Spalte des Arrays leitend miteinander verbunden sind.

4. Antennenvorrichtung nach einem der vorhergehenden Ansprüche, weiter aufweisend:
eine langgestreckte Fokussieranordnung (601, 701, 702), die zum Fokussieren des von der Antenneneinheit (305) abgestrahlten und/oder empfangenen Messsignals ausgeführt ist.

5. Antennenvorrichtung nach Anspruch 4, wobei die Fokussieranordnung (601, 701, 702) eine dielektrische Zylinderlinse (601) aufweist, deren Längsachse parallel zur Längsrichtung der Antenneneinheit (305) ausgerichtet ist.

6. Antennenvorrichtung nach Anspruch 4, wobei die Fokussieranordnung (601, 701, 702) eine Parabolrinne (702) als Hauptreflektor und einen beabstandet dazu angeordneten Gegenreflektor (701) aufweist;
wobei das Array zum Abstrahlen des Messsignals in Richtung des Gegenreflektors auf oder nahe der Oberfläche der Parabolrinne angeordnet ist.

7. Antennenvorrichtung nach einem der vorhergehenden Ansprüche, weiter aufweisend:
eine Hochfrequenzeinheit zum Erzeugen der Messsignale, wobei die Hochfrequenzeinheit in die Antenneneinheit (305) integriert ist.

8. Antennenvorrichtung nach einem der vorhergehenden Ansprüche, weiter aufweisend:
eine Auswerteelektronik, die zusammen mit der Antenneneinheit (305) rotiert, wenn die Antenneneinheit vom der Antriebseinheit (302) in Rotation versetzt wird.

9. Antennenvorrichtung nach Anspruch 8, wobei die Auswerteelektronik in die Antenneneinheit (305) oder in die Antriebseinheit (302) integriert ist.

10. Füllstandmessgerät (301) mit einer Antennenvorrichtung nach einem der Ansprüche 1 bis 9, zur Bestimmung der Topologie einer Füllgutoberfläche.

11. Verwendung einer Antennenvorrichtung nach einem der Ansprüche 1 bis 9 zur Bestimmung der Viskosität einer bewegten Flüssigkeit.

12. Verwendung einer Antennenvorrichtung nach einem der Ansprüche 1 bis 9 zur Bestimmung eines Massestroms eines sich auf einem Förderband befindenden Schüttguts.

13. Verfahren zur Bestimmung der Topologie einer Oberfläche (103) eines Füllguts oder Schüttguts, das Verfahren aufweisend die Schritte:
Rotieren einer Antenneneinheit (305) um eine Rotationsachse; gleichzeitiges Abstrahlen und/oder Empfangen eines Messsignals durch die Antenneneinheit in/aus Richtung einer Oberfläche des Füllguts oder Schüttguts;
Empfang eines von der Oberfläche des Füllguts oder Schüttguts reflektieren Messsignals;
Berechnen der Topologie der Oberfläche aus dem empfangenen Messsignal;
wobei die Antenneneinheit ein Array aus mehreren Strahlerelementen (402) aufweist, die in einer Ebene angeordnet sind, welche mit der Rotationsachse einen Winkel α einschließt, der ungleich 90 Grad beträgt,
wobei das Array ein eindimensionales Array mit einer einzelnen Zeile an Strahlerelementen (402) ist, dessen eine Zeile sich in Längsrichtung der Antenneneinheit (305) erstreckt.

14. Verfahren nach Anspruch 13, weiter aufweisend den Schritt:
Fokussieren des von der Antenneneinheit (305) abgestrahlten und/oder empfangenen Messsignals durch eine langgestreckte Fokussieranordnung (601, 701, 702).

## Claims

1. Antenna apparatus for a fill level measurement device (301), the antenna apparatus comprising:
an antenna unit (305) for emitting a measurement signal towards a filling material surface and for receiving the measurement signal reflected by the filling material surface;
a drive unit (302) for rotating the antenna unit about an axis of rotation;
**characterized in**
**that** the antenna unit comprises an array designed to emit the measurement signal during the rotation the antenna unit and to receive the measurement signal;
**that** the array comprises a plurality of radiator elements (402) that are arranged in a plane which, together with the axis of rotation, forms an angle α that does not equal 90 degrees;
**that** the array is a unidimensional array having a single row of radiator elements (402), the one row of which extends in the longitudinal direction of the antenna unit (305).

2. Antenna apparatus according to claim 1,
wherein the angle α is 45 degrees.

3. Antenna apparatus according to any of the preceding claims,
wherein the array is a two-dimensional array having a plurality of rows arranged in parallel with one another and a plurality of columns of radiator elements (402) arranged perpendicularly to said rows;
wherein the rows extend in the longitudinal direction of the antenna unit (305) and the columns extend in the transverse direction of the antenna unit (305);
wherein the radiator elements of each column of the array are conductively interconnected.

4. Antenna apparatus according to any of the preceding claims, further comprising:
an elongate focussing arrangement (601, 701, 702) designed to focus the measurement signal emitted and/or received by the antenna unit (305).

5. Antenna apparatus according to claim 4,
wherein the focussing arrangement (601, 701, 702) comprises a dielectric cylindrical lens (601), the longitudinal axis of which is parallel to the longitudinal direction of the antenna unit (305).

6. Antenna apparatus according to claim 4,
wherein the focussing arrangement (601, 701, 702) comprises a parabolic trough (702) as a main reflector and a counter reflector (701) arranged at a spacing therefrom;
wherein the array for emitting the measurement signal towards the counter reflector is arranged either on or near to the surface of the parabolic trough.

7. Antenna apparatus according to any of the preceding claims, further comprising:
a high-frequency unit for generating the measurement signals, wherein the high-frequency unit is integrated in the antenna unit (305).

8. Antenna apparatus according to any of the preceding claims, further comprising:
an electronic evaluation system, which rotates together with the antenna unit (305) when the antenna unit is rotated by the drive unit (302).

9. Antenna apparatus according to claim 8,
wherein the electronic evaluation system is integrated in the antenna unit (305) or in the drive unit (302).

10. Fill level measurement device (301) comprising an antenna apparatus according to any of claims 1 to 9 for determining the topology of a filling material surface.

11. Use of an antenna apparatus according to any of claims 1 to 9 for determining the viscosity of a moving liquid.

12. Use of an antenna apparatus according to any of claims 1 to 9 for determining a mass flow rate of a bulk material on a conveyor belt.

13. Method for determining the topology of a surface (103) of a filling material or bulk material, the method comprising the steps of:
rotating an antenna unit (305) about an axis of rotation;
simultaneously emitting a measurement signal towards and/or receiving a measurement signal from a surface of the filling material or bulk material by means of the antenna unit;
receiving a measurement signal reflected by the surface of the filling material or bulk material;
calculating the topology of the surface from the received measurement signal;
wherein the antenna unit comprises an array made up of a plurality of radiator elements (402) that are arranged in a plane which, together with the axis of rotation, forms an angle α that does not equal 90 degrees;
wherein the array is a unidimensional array having a single row of radiator elements (402), the one row of which extends in the longitudinal direction of the antenna unit (305).

14. Method according to claim 13, further comprising the step of:
focussing the measurement signal emitted and/or received by the antenna unit (305) by means of an elongate focussing arrangement (601, 701, 702).

## Revendications

1. Dispositif d'antenne pour un appareil de mesure du niveau de remplissage (301), le dispositif d'antenne comportant :
une unité d'antenne (305) pour l'émission d'un signal de mesure dans la direction d'une surface de matériau de remplissage et pour la réception du signal de mesure réfléchi sur la surface de matériau de remplissage ;
une unité d'entraînement (302) pour la rotation de l'unité d'antenne autour d'un axe de rotation ;
**caractérisé**
**en ce que** l'unité d'antenne comporte un réseau, lequel est réalisé pour l'émission pendant la rotation de l'unité d'antenne et pour la réception du signal de mesure ;
**en ce que** le réseau comporte plusieurs éléments rayonnants (402), lesquels sont agencés dans un plan formant avec l'axe de rotation un angle α différent de 90° ;
**en ce que** le réseau est un réseau unidimensionnel doté d'une unique ligne d'éléments rayonnants (402), laquelle s'étend dans la direction longitudinale de l'unité d'antenne (305).

2. Dispositif d'antenne selon la revendication 1, dans lequel l'angle α est de 45°.

3. Dispositif d'antenne selon l'une des revendications précédentes,
dans lequel le réseau est un réseau bidimensionnel doté de plusieurs lignes parallèles et de plusieurs colonnes agencées perpendiculairement à celles-ci d'éléments rayonnants (402) ;
dans lequel les lignes s'étendent dans la direction longitudinale de l'unité d'antenne (305) et les colonnes s'étendent dans la direction transversale de l'unité d'antenne (305) ;
dans lequel les éléments rayonnants de chaque colonne du réseau sont reliés électriquement l'un à l'autre.

4. Dispositif d'antenne selon l'une des revendications précédentes, comportant en outre :
un arrangement de focalisation allongé (601, 701, 702), lequel est réalisé pour focaliser le signal de mesure émis et/ou reçu par l'unité d'antenne (305).

5. Dispositif d'antenne selon la revendication 4,
dans lequel l'arrangement de focalisation allongé (601, 701, 702) comporte une lentille cylindrique diélectrique (601), dont l'axe longitudinal est orienté parallèlement à la direction longitudinale de l'unité d'antenne (305).

6. Dispositif d'antenne selon la revendication 4,
dans lequel l'arrangement de focalisation allongé (601, 701, 702) comporte une parabole linéaire (702) comme réflecteur principal et un contre-réflecteur (701) agencé à distance de celui-ci ;
dans lequel le réseau est agencé sur ou près de la surface de la parabole linéaire pour émettre le signal de mesure dans la direction du contre-réflecteur.

7. Dispositif d'antenne selon l'une des revendications précédentes, comportant en outre :
une unité haute fréquence pour produire le signal de mesure, dans lequel l'unité haute fréquence est intégrée dans l'unité d'antenne (305).

8. Dispositif d'antenne selon l'une des revendications précédentes, comportant en outre :
une électronique de contrôle, laquelle est en rotation simultanée avec l'unité d'antenne (305) lorsque l'unité d'antenne est mise en rotation par l'unité d'entraînement (302) .

9. Dispositif d'antenne selon la revendication 8, dans lequel l'électronique de contrôle est intégrée dans l'unité d'antenne (305) ou dans l'unité d'entraînement (302).

10. Appareil de mesure du niveau de remplissage (301) doté d'un dispositif d'antenne selon l'une des revendications 1 à 9 pour déterminer la topologie d'une surface de matériau de remplissage.

11. Utilisation d'un dispositif d'antenne selon l'une des revendications 1 à 9 pour déterminer la viscosité d'un fluide mis en mouvement.

12. Utilisation d'un dispositif d'antenne selon l'une des revendications 1 à 9 pour déterminer un débit massique d'un solide en vrac se trouvant sur une bande convoyeuse.

13. Procédé de détermination de la topologie d'une surface (103) d'un matériau de remplissage ou d'un solide en vrac, le procédé comportant les étapes :
rotation d'une unité d'antenne (305) autour d'un axe de rotation ;
émission et/ou réception d'un signal de mesure par l'unité d'antenne vers/depuis la direction d'une surface d'un matériau de remplissage ou d'un solide en vrac ;
réception d'un signal de mesure réfléchi par la surface du matériau de remplissage ou du solide en vrac ;
calcul de la topologie de la surface à partir du signal de mesure reçu ;
Dans lequel l'unité d'antenne comporte un réseau de plusieurs éléments rayonnants (402), lesquels sont agencés dans un plan formant avec l'axe de rotation un angle α différent de 90°,
dans lequel le réseau est un réseau unidimensionnel doté d'une unique ligne d'éléments rayonnants (402), laquelle s'étend dans la direction longitudinale de l'unité d'antenne (305).

14. Procédé selon la revendication 13 comprenant en outre l'étape :
focalisation du signal de mesure émis et/ou reçu par l'unité d'antenne (305) par un arrangement de focalisation allongé (601, 701, 702).
